# EUROPÄISCHE PATENTANMELDUNG

(11) **EP 1 387 589 A1**
(43) Veröffentlichungstag der Anmeldung: **04.02.2004**
(21) Anmeldenummer: 02017090.8
(22) Anmeldetag: 29.07.2002
(51) Int. Cl.: H04Q 3/00, H04M 7/00

(54) **Media Gateway zur Bereitstellung der PSTN/ISDN Dienste in Netzwerken der nächsten Generation**

(71) Anmelder: SIEMENS AKTIENGESELLSCHAFT, 80333 München (DE)
(72) Erfinder: Hackl, Kathrin, 83115 Neubeuern (DE); Held, Walter, 82538 Geretsried (DE); Ruckstuhl, Hanspeter, 82515 Wolfratshausen (DE)

(57) **Zusammenfassung**

Die paket-basierten Netzwerke der nächsten Generation arbeiten nach dem Prinzip der Separierung von Verbindungs- und Nutzkanalsteuerung. In diesen Netzen werden, anders als in heutigen TDM Netzen, getrennte Netzelemente zur Verbindungssteuerung und zur Nutzkanalsteuerung verwendet, wobei das Netzelemet zur Nutzkanalsteuerung als Media Gateway und das Netzelement zur Verbindungssteuerung als Media Gateway Controller bezeichnet wird. Durch die physikalische und örtliche Trennung der Verbindungs- und Nutzkanalsteuerung entstehen Probleme, insbesondere das Problem des Performanceverlust durch stark vermehrtes Aufkommen von Signalisierungsnachrichten und durch größere, entfernungsbedingte Signalisierungsverzögerungszeiten. Diese Probleme werden erfindungsgemäß dadurch gelöst, dass ein Teil der Verbindungssteuerung in das Media Gateway integriert wird, während der übrige Teil der Verbindungssteuerung, insbesondere derjenige, der zentrale Steuerungs- und Kontrollaufgaben betrifft, nach wie vor im Media Gateway Controller verbleibt.

## Beschreibung

### 1. Welches technische Problem soll durch die Erfindung gelöst werden?

In den heutigen Sprachnetzen (PSTN/ISDN), welche auf dem Prinzip der Leitungsvermittlung basieren, übernehmen die Orts- und Transitvermittlungsstellen sowohl die Verbindungssteuerung als auch die Nutzkanalsteuerung (z.B. Zweierverbindung, Dreierverbindung, Einspeisen von Tönen).

Die Netzwerke der nächsten Generation (Next Generation Network, abgekürzt NGN) sind paket-basiert (z.B. ATM oder IP als Transport Ebene) und sind sowohl für den Transport von Sprache als auch von Daten konzipiert. Sie arbeiten nach dem Prinzip der Separierung von Verbindungs- und Nutzkanalsteuerung. In diesen Netzen werden, anders als in heutigen TDM Netzen, getrennte Netzelemente zur Verbindungssteuerung (Call und Signaling Control) und zur Nutzkanalsteuerung (Bearer oder Media Control) verwendet. Die Verbindungssteuerung übernehmen Media Gateway Controller (MGC), welche mittels eines Media Gateway Control Protokolls (MGCP), derzeit stehen MGCP oder H.248 zur Verfügung, mit den Media Gateways (MG) kommunizieren, welche die Nutzkanäle steuern. Die Signalisierung wird im Media Gateway Controller terminiert.

Die Media Gateway Controller im NGN kommunizieren untereinander über ein Signalisierungsprotokoll (z.B. BICC-Protokoll) analog zu den Vermittlungsstellen des PSTN/ISDNs (z.B. #7-Signalisierung).

Die Netzelemente (MGC und MG) sind physikalisch und im Normalfall auch örtlich getrennt. Örtlich getrennt kann bedeuten, dass ein MG und sein steuernder MGC viele hundert Kilometer auseinander stehen oder sogar über Satellitenstrecken miteinander kommunizieren. Ein Media Gateway Controller übernimmt im Regelfall die Verbindungssteuerung für mehrere Media Gateways. Ein Media Gateway nach heutigem NGN-Architekturverständnis (Master-Slave Konzept) ist ohne Media Gateway Controller nicht in der Lage Verbindungen eigenständig zu schalten oder andere Entscheidungen bezüglich der Verbindungssteuerung zu treffen.

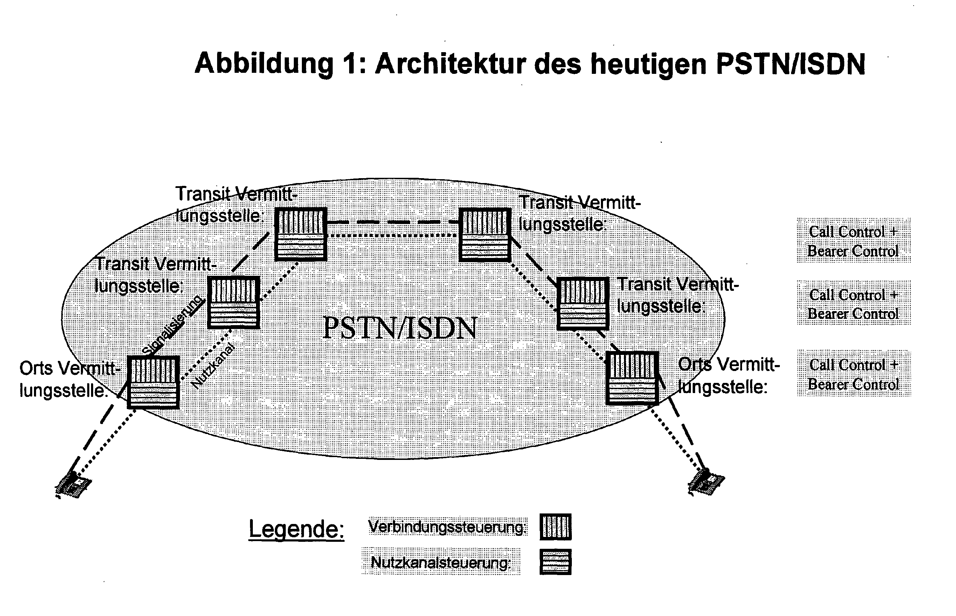

Abbildung 1 zeigt das Prinzip der heutigen PSTN/ISDN Netze.

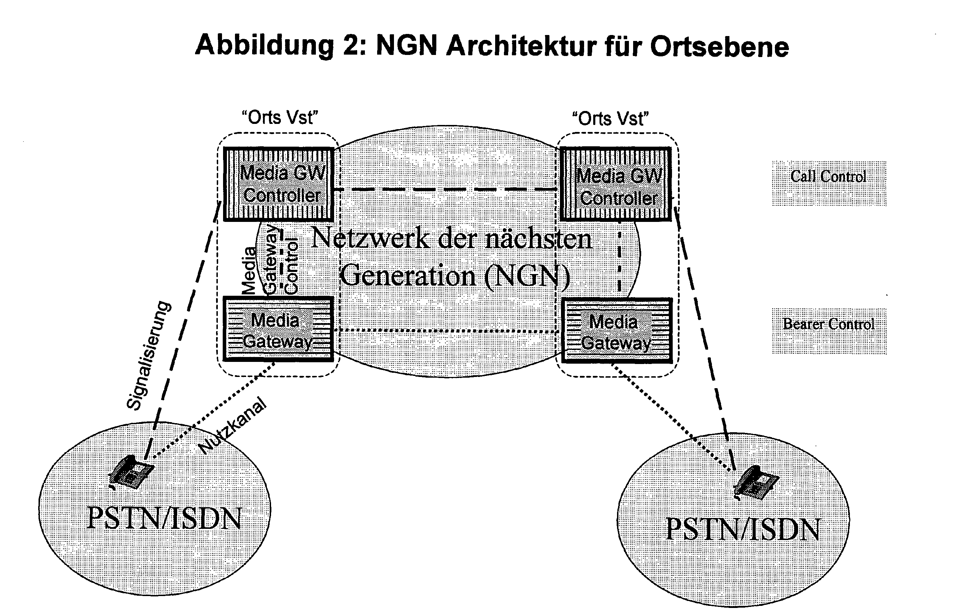

Die Abbildung 2 zeigt das Beispiel für das Prinzip der Sprachkommunikation in Netzen der nächsten Generation nach heutigem NGN Verständnis.

Durch die physikalische und örtliche Trennung der Verbindungs- und Nutzkanalsteuerung und ihre Behandlung durch den Media Gateway Controller und das Media Gateway entstehen nachfolgend beschriebene Problempunkte:
- Performanceverlust durch stark vermehrtes Aufkommen von Signalisierungsnachrichten und durch größere, entfernungsbedingte Signalisierungsverzögerungszeiten
- Eingeschränkte Verfügbarkeit der Teilnehmer- oder Verbindungsleitungen im Fehlerfall des Paketnetzes oder des steuernden Media Gateway Controllers
- Probleme mit zeitgenauer Vergebührung von Verbindungen

### 1.1 Performanceverlust durch stark vermehrtes Aufkommen von Signalisierungsnachrichten und durch größere, entfernungsbedingte Signalisierungsverzögerungszeiten

Im Vergleich zur klassischen Telefonarchitektur sind bei getrennter Verbindungs- und Nutzkanalsteuerung für Teilnehmeranschlüsse eine deutlich größere Anzahl zeitkritischer Signalisierungsnachrichten zur synchronen Steuerung des Nutzkanals zwischen Media Gateway Controller und Media Gateway auszutauschen. So müssen die vom Endgerät empfangenen Signalisierungsnachrichten im Falle z.B. eines ISDN Teilnehmers zunächst über ein gesichertes Protokoll zum Controller gesandt werden. Der Media Gateway Controller führt dann die Auswertung der Signalisierungsnachrichten durch und beauftragt das Media Gateway mittels des Kontrollprotokolls zur Anschaltung z.B. des Ruftones. Mit Empfang der Wahlinformation wird diese zunächst wieder zum Controller übertragen, bis dieser die Abschaltung des Tones beauftragt. Eine noch größere Nachrichtenflut wird im Fall eines analogen Teilnehmers erzeugt beim Empfang und Weitergabe der einzelnen Wahlziffern.

Die große Anzahl der ausgetauschten Nachrichten zwischen MG und MGC für einen Rufaufbau, verbunden mit der Übertragung dieser Nachrichten über eine externe Schnittstelle über potentiell große Entfernungen können zu erheblichen merkbaren Verzögerungen beim Verbindungsaufbau führen. Die Verzögerungen wirken zum Einem beim Ausführen zeitkritischer Aufträge, wie das Anschalten des Code Receivers, funktionseinschränkend und können zum Anderen dazu führen, dass bestehende Zeitanforderungen der externen Teilnehmersignalisierungsschnittstelle in einem NGN nicht mehr eingehalten werden können.

### 1.2 Eingeschränkte Netzverfügbarkeit - Keine Möglichkeit eines Verbindungsaufbaus im Fehlerfall des Netzes oder bei Ausfall des Media Gateway Controllers

Durch das vollständige Fehlen einer lokalen Verbindungssteuerung, und damit durch die völlige Abhängigkeit vom Media Gateway Controller, ist ein Media Gateway nicht in der Lage bei Ausfall des Media Gateway Controllers oder bei einer netzstörungsbedingten Unterbrechung der Signalisierung zwischen MG und MGC, die an ihm angeschlossenen Nutzkanäle der Teilnehmer zu schalten. Das heißt, der Ausfall eines Media Gateway Controllers bedeutet immer den Ausfall aller von ihm kontrollierten Media Gateways mit allen Teilnehmer- und Verbindungsleitungsanschlüssen. Es ist in diesem Fall auch kein Notruf mehr möglich. Da ein Media Gateway Controller in der Regel mehrere Media Gateways kontrolliert, können sehr viele Anschlüsse von einem derartigen Ausfall betroffen sein.

### 1.3 Zeitgenaue Vergebührung

Durch die Trennung der Verbindung- und Nutzkanalsteuerung kann es zu Problemen der zeitgenauen Erfassung der Vergebührung kommen, da der Nutzkanal im Media Gateway geschaltet wird, die Zeitstempelerfassung aber im Media Gateway Controller durchgeführt wird.

### 2. Wie wurde dieses Problem bisher gelöst?

Die dargestellten technischen Probleme sind bisher nicht bekannt und ergeben sich als Folge der Verwendung des standardisierten Funktionssplitt für die Netze der nächsten Generation zur Bereitstellung der klassischen Telephoniedienste (Nachbildung des PSTN/ISDN).

Eingeschränkt vergleichbare Probleme bei der Verwendung eines reinen Master-Slave Prinzips treten für TDM Netze bei der Definition von klassischen Access Networks auf. Hierbei ist das Access Network über die V5 Schnittstelle an einen TDM Switch angeschlossen, wobei der TDM Switch als Master und das Access Network als Slave arbeitet.

Das Problem bei der Anbindung eines Access Networks an einen TDM Switch weicht in folgenden Punkten von den Problemen bei der Verwendung der NGN Architektur ab,
(a) die räumliche Trennung ist normalerweise begrenzt,
(b) die Kontroll- und Signalisierungsnachrichten werden über ein gesichert verfügbaren Nachrichtenkanal ausgetauscht, dessen Bandbreite fest definiert ist,
(c) ein Access Gateway hat verglichen mit einem Media Gateway nur eine eingeschränkte Nutzkanalkontrolle, da der Nutzkanal vom TDM Switch verwaltet wird. Der Nutzkanal wird ebenso über den TDM Switch geführt und erst dort wird das Anlegen von Tönen oder die Vergebührung durchgeführt.

Das Problem der Behandlung zeitkritischer Aufträge wurde dort durch die Einführung von bedingten Anweisungen gelöst. Das Problem der begrenzten Verfügbarkeit wurde dort nicht gelöst.

### 3. In welcher Weise löst Ihre Erfindung das angegebene technische Problem?

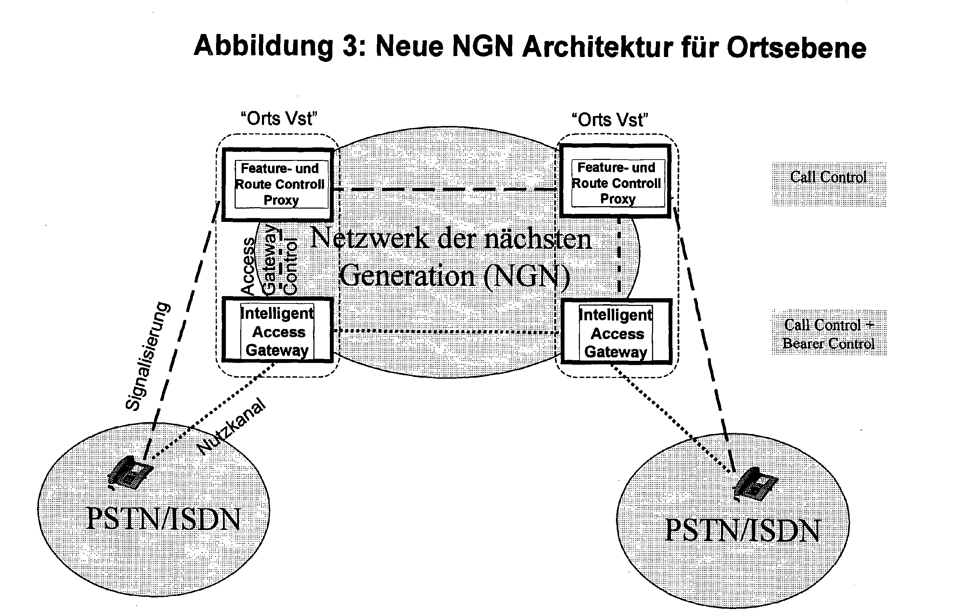

Die Erfindung sieht eine neue Funktionsaufteilung für NGN vor, die in Abbildung 3 dargestellt ist. Anstelle der im NGN-Konzept verfolgten strickten Master-Slave Aufteilung wird ein Proxy-Client Ansatz gewählt, d.h. es wird ein Teil der Verbindungssteuerung in das Media Gateway integriert, während der übrige Teil der Verbindungssteuerung, insbesondere derjenige, der zentrale Steuerungs- und Kontrollaufgaben betrifft, nach wie vor im Media Gateway Controller verbleibt. Der erfindungsgemäß ausgestaltete Media Gateway Controller wird nachfolgend als netzzentrale Steuerungseinrichtung bezeichnet und das erfindungsgemäß ausgestaltete Media Gateway wird nachfolgend als Intelligent Access Gateway bezeichnet.

Im Gegensatz zu einer "Master-Slave"-Beziehung, in der die gesamte Kontrolle über eine Verbindung beim Media Gateway Controller (=Master) liegt und ein Access Gateway (=Slave) nur Anreize und Ereignisse zum Media Gateway Controller meldet und von diesem Befehle bezüglich der Verbindungssteuerung ausführt, wird erfindungsgemäß ein Client-Proxy Ansatz gewählt. Nach diesem Ansatz terminiert der "Intelligent Access Gateway" (=Client) die genannten Anreize bzw. Ereignisse (Signalisierung) und führt einen Teil der Verbindungssteuerungsfunktionen selbst durch, insbesondere solche Verbindungssteuerungsfunktionen, die nicht unbedingt von einer netzzentralen Steuerungseinrichtung (=Proxy) bereitgestellt werden müssen, sondern direkt von einem Client erbracht bzw. zwischen den an einer Verbindung beteiligten Clients ausgehandelt werden können.
Für die Durchführung des übrigen Teils beauftragt er eine der netzzentralen Steuerungseinrichtungen, die den Auftrag entweder selbst durchführt oder deren weitere Durchführung anstelle des Gateways steuert.
Bei den Verbindungssteuerungsfunktionen, die der Intelligent Access Gateway (Client) selbst durchführt, handelt es sich für den Client des rufenden Teilnehmers (A) bzw. Client des gerufenen Teilnehmers (B) um Funktionen wie
- Wählton anlegen (A)*
- Wahlinformation aufnehmen (A)*
- Anzeige der Rufnummer des rufenden Teilnehmers über FSK bei analogen Teilnehmern (B)*
- Anrufwiederholung bei "Teilnehmer besetzt" (A und B)
- Aushandeln zwischen den Partnern welche Seite für die Gesprächskosten aufkommt (A und B)
- Gebührendatenerfassung (A und/oder B)*
- Gebühreninformation auf der vergebührenden Seite zum Teilnehmerendgerät hin übertragen (A oder B)
- Austausch der erforderlichen Endpunktdaten (IP-Addresse Port-Nummer, Codec-informationen, etc.) für das Durchschalten von Verbindungen (A und B)*
- Dreierkonferenz verwalten (A oder B)
- Autonomes Routen von Gesprächen zu ausgewählten fest administrierten Zielen (z.B. Notrufnummern) bei Ausfall des Proxies (A oder B)

Ein großer Vorteil der Erfindung wird vor allem durch die Übernahme von solchen der lokalen Bearbeitung zugänglichen Verbindungssteuerungsfunktionen erzielt, die zeitkritisch sind (Bei den obengenannten Funktionen sind die zeitkritischen mit einem Stern (*) markiert).

Durch die genannte Übernahme von Verbindungssteuerungsfunktionen durch die Access Gateways reduziert sich die Aufgabe der netzzentralen Steuerungseinrichtungen (Media Gateway Controller, Proxy) auf dem Gebiet der Verbindungssteuerung auf Funktionen, welche eine zentrale Datenbasis benötigen, wie beispielsweise das Call Routing, das Aufbereiten von Vergebührungsinformationen, und auf die Koordination von bestimmten Features, die sich auf mehrere Clients verteilen können (z.B. Centrex).
Die netzzentrale Steuerungseinrichtung wird daher im folgenden auch als Feature and Route Control Proxy bezeichnet (siehe Abbildung 3).

Außer den genannten Verbindungssteuerungsfunktionen übernimmt der Intelligente Access Gateway die Terminierung der Signalisierung (Teilnehmerleitungssignaliserung und Verbindungsleitungssignalisierung) und führt wie bereits bisher die Nutzkanalsteuerung durch.
Die Teilnehmerdaten werden bei der genannten Arbeitsteilung vorteilhafterweise im Intelligent Access Gateway gespeichert und verwaltet.

Durch die Erfindung werden alle drei bereits angeführten Problembereiche gleichermaßen gelöst.

### 3.1 Problem des Performanceverlusts

Durch die lokalen Anteile der Verbindungssteuerung werden alle Nutzkanaleinstellungen direkt im Intelligenten Access Gateway über ein internes Interface zwischen der Verbindungsund der Nutzkanalsteuerung signalisiert. Die Auswertung der Signalisierungsnachrichten kann ohne Verzögerung erfolgen und sofort die Bereitstellung der erforderlichen Ressourcen beantragt werden. Damit entstehen keine zeitkritischen Verzögerungen. Nachrichten zur Feature Steuerung sind in ihrer Anzahl geringer und nicht vergleichbar zeitkritisch. Gleiches gilt für das Call Routing.

### 3.2 Problem der eingeschränkten Netzverfügbarkeit

Durch die lokale Verbindungssteuerung und die Kenntnis der vorhandenen Teilnehmeranschlüsse im Intelligenten Access Gateway ist das Gateway in der Lage zumindest eine eingeschränkte Verbindungssteuerung für alle vorhandenen Teilnehmeranschlüsse durchzuführen, ohne mit dem Feature and Route Proxy kommunizieren zu müssen, wenn ein alternativer Route Proxy im Netz zur Verfügung steht, welcher keinerlei Kenntnisse über vorhandene Teilnehmer haben muss.

Durch die lokale Einrichtung einer festen Route für den Notbetrieb sind Rufe zu angeschlossenen Notrufzentralen ohne einen vorhandenen Route Proxy möglich.

### 3.3 Problem der zeitgenauen Vergebührung

Die Erfassung der notwendigen Vergebührungsdaten erfolgt unmittelbar und zeitgenau im Intelligenten Access Gateway, da sowohl der Zeitstempel wie auch die Schaltung des Nutzkanals im Intelligentem Access Gateway durchgeführt wird, ohne dass Verzögerungen über ein externes Transportnetz auftreten können.

Zur weiteren Verarbeitung der erhobenen Gebührendaten werden diese verbindungsbezogenen Daten dann entweder direkt oder über den Feature und Route Proxy an ein übergeordnetes Gebührennachbearbeitungssystem geschickt .

### 4. Vergleich der Erfindung mit traditionellem Funktionsansatz

Die erfindungsgemäße NGN-Struktur entsteht durch Übernahme von Elementen des traditionellen Funktionsansatzes der kombinierten Nutzkanal- und Verbindungssteuerung. Die Elemente der traditionellen Funktionskontrolle erlauben die präzise Steuerung aller zeitkritischen Vorgänge der Verbindungs- und Nutzkanalkontrolle, unter Beibehaltung des Ansatzes eines zentralen Call Servers zur Steuerung von Access Gateways. Die Möglichkeit des Einsatzes eines großen zentralen Call Servers, welcher örtlich auch über eine größere Entfernung von den im Netz verteilten Access Gateways getrennt sein kann, wird mit dieser Architektur stark begünstigt, da Laufzeitverzögerungen im Transportnetz hiermit kein Dimensionierungskriterium mehr sind.

### 5. Ausführungsbeispiel(e) der Erfindung

Das Kennzeichen eines Intelligenten Access Gateways (IAGW) ist die Existenz einer umfassenden Call Control Funktion auf dem Access Gateway. Nachdem die Partner bekannt sind, gibt es grundsätzlich zwei Möglichkeiten der Kommunikation zwischen 2 IAGWs zur Verbindungssteuerung:
- Alle Nachrichten zwischen dem einen IAGW (Client A) und dem anderen IAGW (Client B) werden grundsätzlich über den Proxy geführt und von diesem ohne Interpretation des Inhalts an das Ziel weitergeleitet.
- Nachdem Client A vom Proxy die Zieladresse des Client B mitgeteilt wurde, kommunizieren diese direkt miteinander. Nur wenn im weiteren Verlauf besondere zentrale Features für die Verbindung benötigt werden, wird der Proxy zeitweise in die Kommunikationsbeziehung mit eingeschlossen.

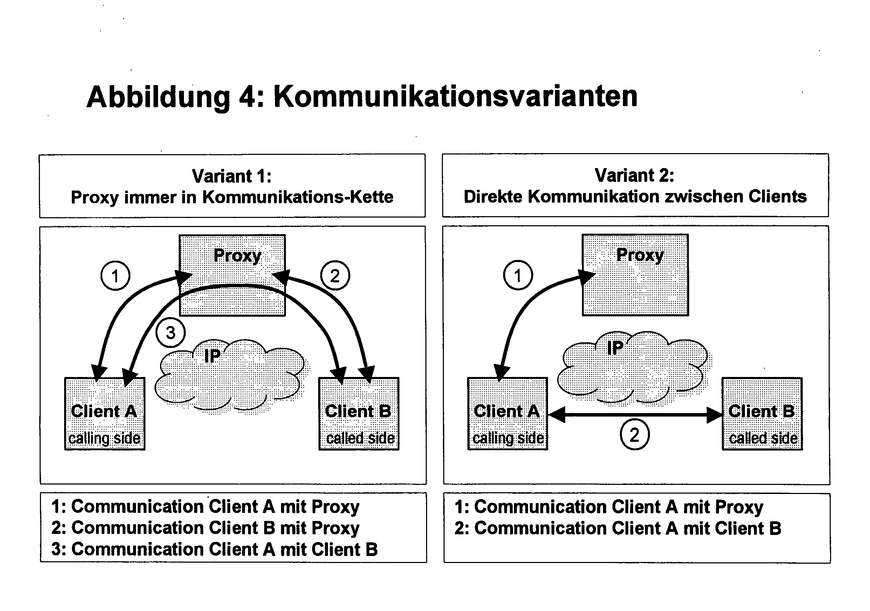

Diese grundsätzlichen Kommunikationsbeziehungen sind in Abbildung 4 dargestellt.

### 5.1 Intelligentes Access Gateway

Der Ansatz eines Intelligent Access Gateways wird in der Produktlinie SURPASS mit der Entwicklung des hiA 7600 erstmals realisiert. Hierbei wandert die Funktion des Connection Agents (CoX), welche die Verbindungsauf- und abbauabläufe auf dem Media Gateway steuert, vom Media Gateway Controller auf das Media Gateway selbst.

Das Intelligent Access Gateway hiA 7600 wird von dem Feature and Route Control Proxy hiQ 9200 gesteuert. Der Meldungsaustausch zwischen dem MGC und dem MG erfolgt über ein proprietäres Access Gateway Control Protokoll, da die standardisierten Protokolle MGCP und H.248 nicht für den angestrebten Funktionssplitt standardisiert wurden und rein der Nutzkanalsteuerung dienen. In zukünftigen Versionen kann aber als Client-Proxy Protokoll ebenfalls das SIP-Protokoll verwendet werden.

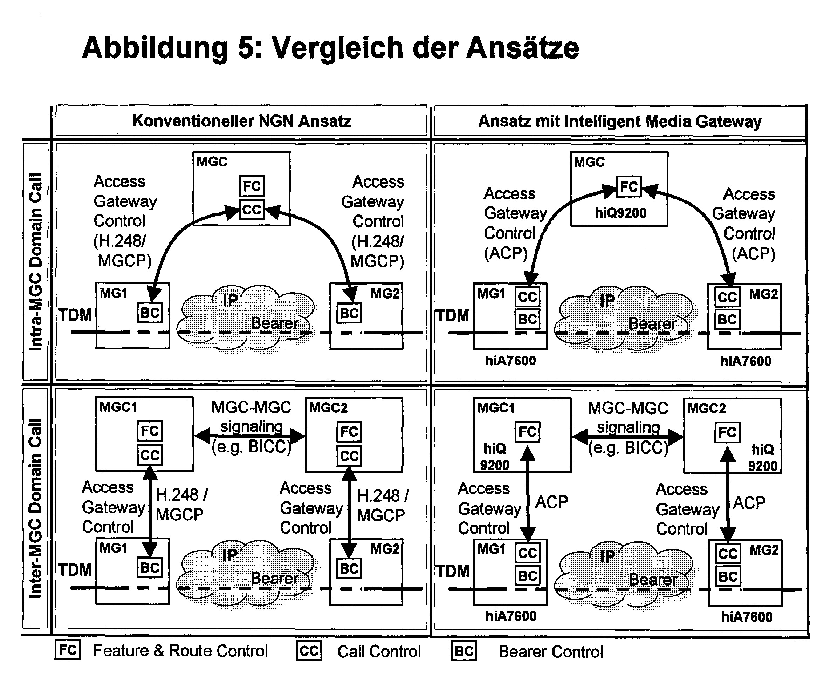

Abbildung 5 zeigt einen Vergleich der Architekturen mit konventionellem NGN-Ansatz mit dem Ansatz den der hiA 7600 realisiert:

In Abbildung 5 ist deutlich erkennbar, wie im neuen NGN-Ansatz die Call Control Funktion auf das Media Gateway verschoben ist und die externe H.248 / MGCP Schnittstelle zu einer systeminternen Schnittstelle wird mit allen damit verbundenen Vorteilen, welche in den obigen Kapiteln beschrieben wurden. Der hiA 7600 enthält als Kernstück einen Call Control Prozessor, welcher die IP-TDM Mediation steuert und durchführt. Der Call Control Prozessor enthält gleichzeitig die Steuerungssoftware für die Basisverbindungs- und die Nutzkanalsteuerung. Mittels des Access Control Protokolls erfolgt der Nachrichtenaustausch mit dem Feature and Route Control Proxy hiQ 9200, welcher das Routing und die Featurebehandlung durchführt. Daneben steuert der Control Proxy alle Aktionen, welche zu weiteren Feature Control Proxys ausgeführt werden müssen zur Featurebehandlung, bzw. die Kommunikation zwischen zwei Control Proxys zur Behandlung des Rufes, wenn die Anschlüsse verschiedenen Control Proxys zugeordnet sind (Für das Routing ist jeder hiA 7600 mit seinen Anschlüssen einem Controller zugeordnet über den er erreichbar ist und der Wissen über die Belegungszustände hat).

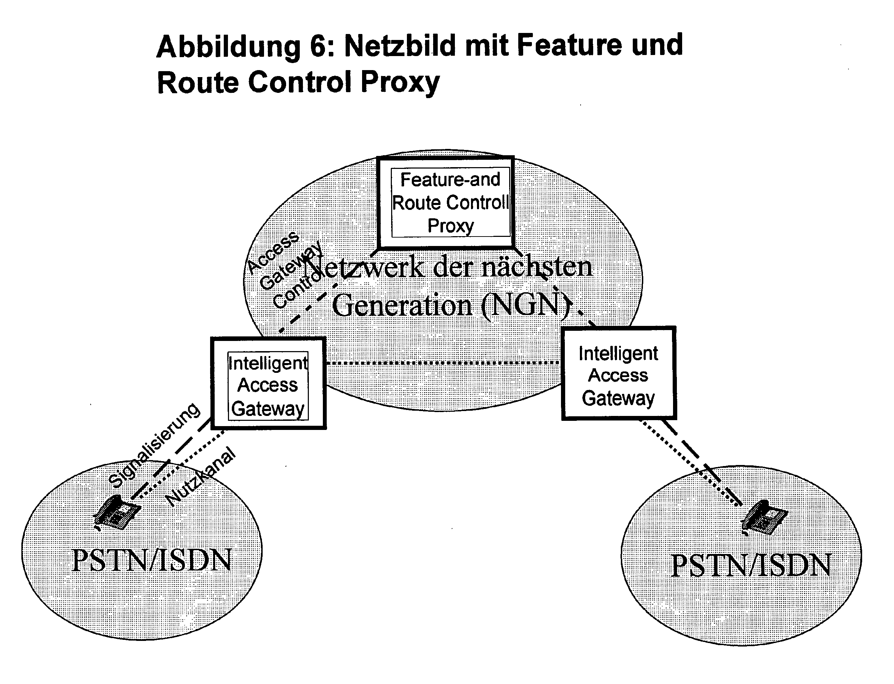

Abbildung 6 zeigt zunächst das Netzbild für einen solchen Basic Call, bei dem dem Control Proxy beide Anschlüsse zugeordnet sind.

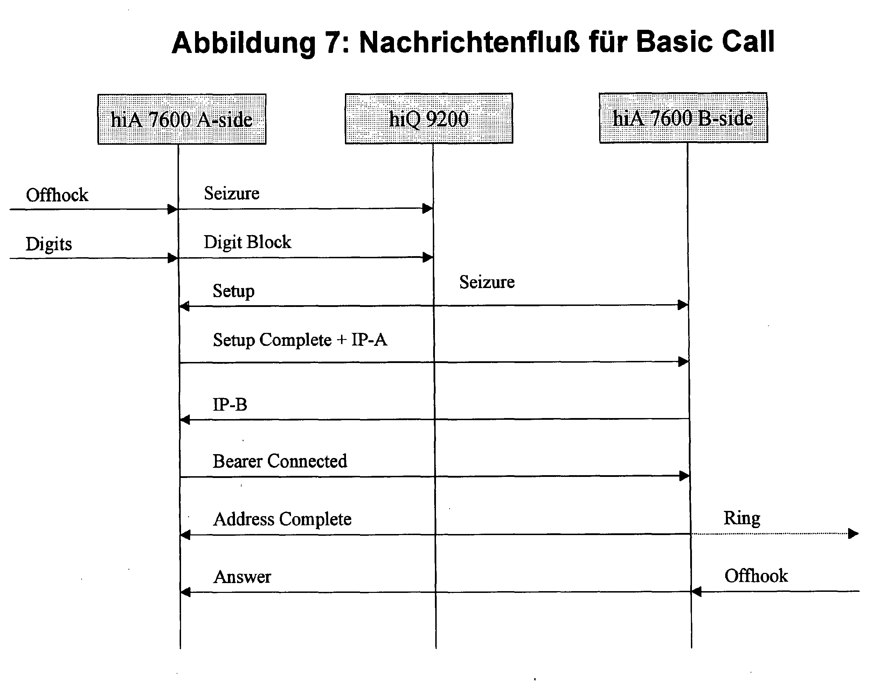

Abbildung 7 zeigt den zu Abbildung 6 gehörigen Fluss der Signaiisierungsnachrichten für den genannten Basic Call.

Für die Kommunikation zwischen den Intelligenten Access Gateways kommen, wie vorher bereits erwähnt, die zwei folgenden Varianten in Frage.
- Proxy-Variante a): Alle Nachrichten zwischen zwei Intelligenten Access Gateways (Clients) werden grundsätzlich über den Proxy geführt
- Proxy-Variante b): Nur Feature- und Routingbezogene Anfragen werden von einem Intelligenten Access Gateway (Client) zum Proxy geschickt. Die restliche Kommunikation zur Verbindungssteuerung läuft direkt zwischen den beteiligten Clients.

Im vorliegenden Beispiel (hiA 7600) wird die Proxy-Variante a) verwendet. Alle Signalisierungsnachrichten - auch diejenigen, die direkt zwischen den Access Gateways ausgetauscht werden könnten - laufen somit über den Proxy, werden jedoch nicht auf dem Proxy bearbeitet (siehe Abbildung 7).

Aus dem Nachrichtenfluss in Abbildung 7 ist des weiteren folgendes ersichtlich:

Die Teilnehmersignalisierung (MFC, DSS1, etc) wird am Intelligent Access Gateway terminiert. Die für die Durchführung des Digit Processing und Routing, ebenso wie fürs Feature Handling, notwendigen Informationen werden über das Proxy-Client Protokoll, im Falle des hiA 7600 über ACP, zum Proxy gesendet.

Im Falle von SS7-signalisierten Verbindungsleitungen, bei denen die Signalisierungskanäle gemeinsam mit den Verbindungsleitungen auf dem Intelligent Access Gateway terminiert werden, werden MTP und SCCP nicht von dem Intelligent Access Gateway bearbeitet. Nur die höheren SS7 user parts (z.B. ISUP) werden auf dem Intelligent Access Gateway bearbeitet. Im Falle des hiQ 9200 ist die Bearbeitung der unteren Schichten des SS7 Protokolls Aufgabe des im Control Proxy hiQ 9200 integrierten Signaling Gateways.

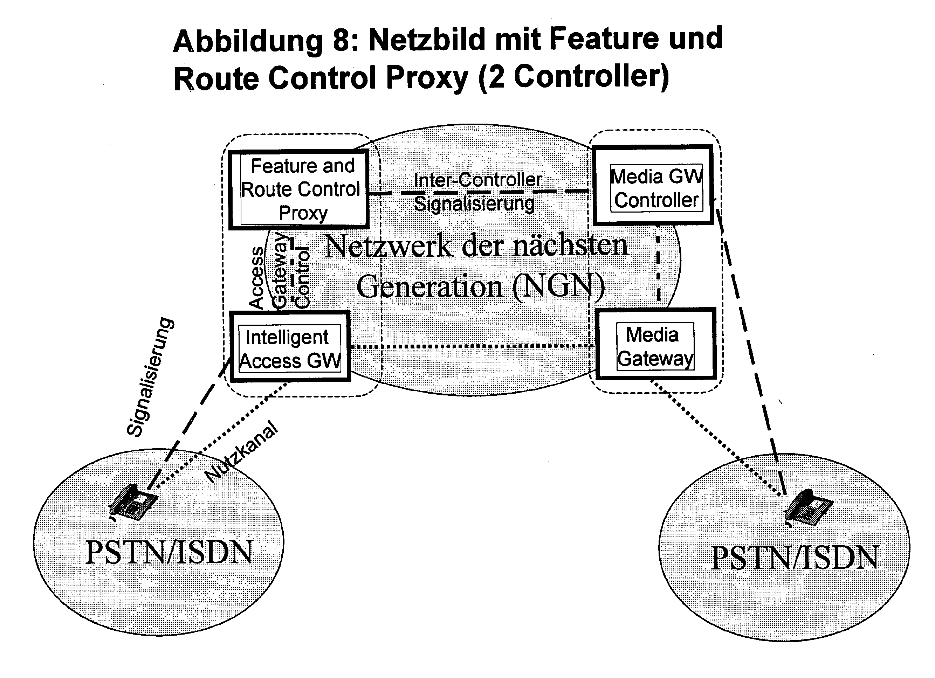

Abbildung 8 zeigt das Netzbild für einen solchen Basic Call, bei dem nur der eingangsseitige Access vom Control Proxy gesteuert wird.

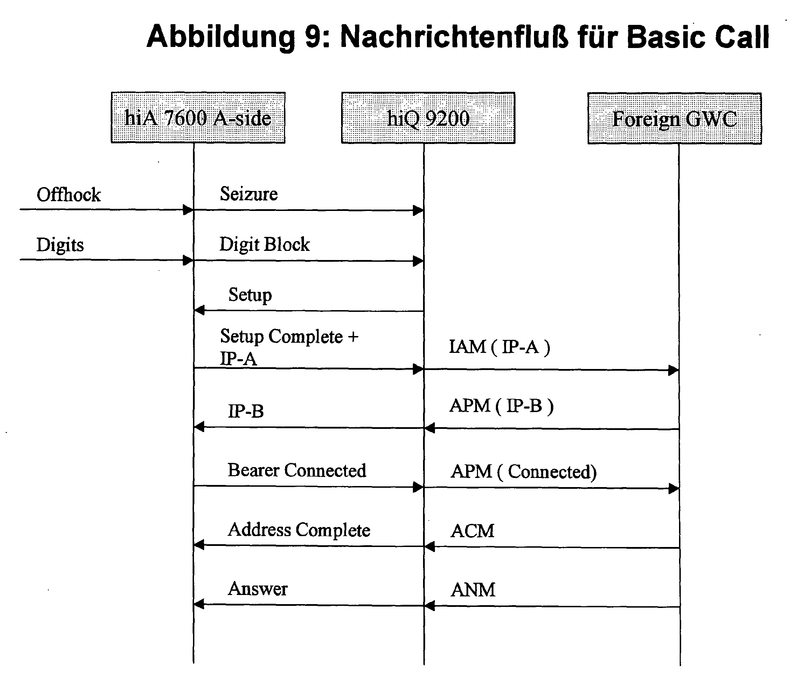

Abbildung 9 zeigt den zu Abbildung 8 gehörigen Signalisierungsfluss.

Der ausgangsseitige Anschluß kann von einem anderen Control Proxy gesteuert werden, aber auch von einem Media Gateway Controller. Die Kommunikation zwischen den Kontrollern erfolgt mittels BICC, wie hier dargestellt, oder SIP-T.

Da der Control Proxy die Funktionalität des Interworkings enthält und mittels BICC und SIP-T zwei standardisierte Network-Network Interface Protokolle unterstützt, ist ein Zusammenwirken der unterschiedlichen NGN Architekturen für die Access Control innerhalb eines Netzes möglich.

### 5.2 SIP Access Client

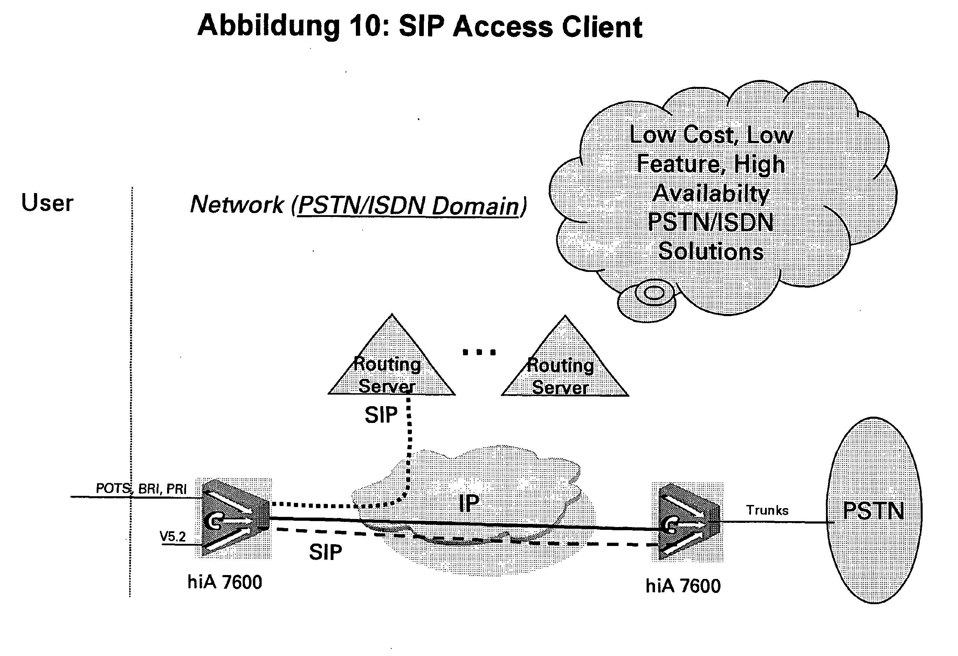

Der Ansatz eines Intelligenten Access Gateway entspricht der von SIP verfolgten Funktionsaufteilung und ermöglicht damit die Einbindung des Access Gateways in die SIP Welt. Das Access Control Protokoll wird durch das standardisierte SIP Protokoll ersetzt (siehe Abbildung 10). Mittels SIP Signalisierung wird eine Session zu einem SIP Proxy aufgebaut. Der SIP Proxy liefert die nötigen Informationen zur Lokalisierung des B-Teilnehmers. Der unterstützte Featureumfang für die Teilnehmer hängt von den unterstützten Features innerhalb der SIP Domain ab.

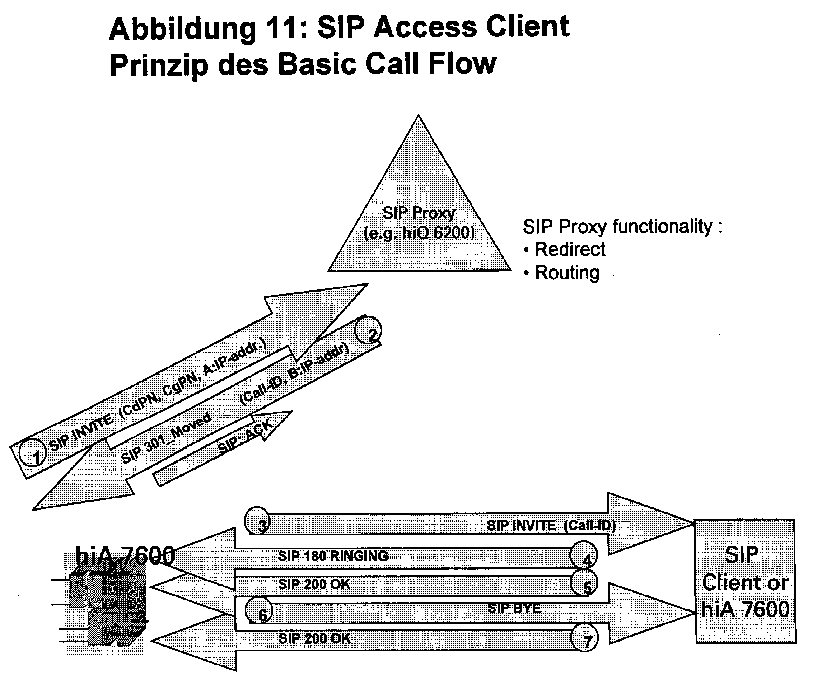

Abbildung 11 zeigt den Meldungsfluss zwischen Clients und Proxy unter Verwendung von SIP.

Über das Intelligente Access Gateway ist der Anschluss aller herkömmlichen Teilnehmeranschlüsse (PSTN, ISDN) an eine SIP Domain möglich. Damit ergibt sich eine kostengünstige und hoch verfügbare Lösung für die PSTN/ISDN Anbindung.

## Patentansprüche

1. Media Gateway eines paket-basierten Kommunikationsnetzes, mit
- einem Nutzkanalsteuerungsmittel, das den Nutzkanal einer Kommunikationsverbindung steuert,
**gekennzeichnet durch**,
- ein Terminierungsmittel, das Signalisierungsnachrichten einer Kommunikationsverbindung terminiert,
- ein Verbindungssteuerungsmittel, das einen Teil der Verbindungssteuerung einer Kommunikationsverbindung selbst durchführt und für die Durchführung des anderen Teils eine netzzentrale Steuerungseinrichtung beauftragt.

2. Media Gateway nach Anspruch 1
**dadurch gekennzeichnet, dass**
das genannte Verbindungssteuerungsmittel alle Funktionen der Verbindungssteuerung durchführt, die nicht unbedingt netzzentral ausgeführt werden müssen.

3. Media Gateway nach Anspruch 1
**dadurch gekennzeichnet, dass**
das genannte Verbindungssteuerungsmittel alle Funktionen der Verbindungssteuerung durchführt, die nicht unbedingt netzzentral ausgeführt werden müssen und die zeitkritisch sind.

4. Media Gateway nach einem der Ansprüche 1 bis 4,
**dadurch gekennzeichnet, dass**
er ein Verwaltungsmittel enthält, das die Teilnehmerdaten speichert und verwaltet.

5. Media Gateway nach einem der Ansprüche 1 bis 4,
**dadurch gekennzeichnet, dass**
er die Gebührendatenerfassung zu einer Kommunikationsverbindung durchführt.

6. Media Gateway nach einem der Ansprüche 1 bis 5,
**dadurch gekennzeichnet, dass**
er für die Kommunikation mit einer genannten netzzentralen Steuerungseinrichtung das Access Control Protokoll verwendet.

7. Media Gateway nach einem der Ansprüche 1 bis 5,
**dadurch gekennzeichnet, dass**
er für die Kommunikation mit einer genannten netzzentralen Steuerungseinrichtung das SIP-Protokoll verwendet.

8. Media Gateway nach einem der Ansprüche 1 bis 7,
**dadurch gekennzeichnet, dass**
er die Nachrichten zur Verbindungssteuerung, die für einen anderen Gateway bestimmt sind, über eine genannte netzzentrale Steuerungseinrichtung zu dem anderen Gateway sendet.

9. Steuerungseinrichtung in einem paket-basierten Netz, mit einem Verbindungssteuerungsmittel, das für Kommunikationsverbindungen netzzentrale Verbindungssteuerungsfunktionen durchführt,
**dadurch gekennzeichnet, dass**
sie Aufträge zur Durchführung der genannten Verbindungssteuerungsfunktionen von Media Gateways entgegennimmt und entweder selbst durchführt oder deren weitere Durchführung anstelle der Media Gateways steuert.

10. Verfahren zur Behandlung von Kommunikationsverbindungen in einem paket-basierten Netz, demgemäß
- von einer Teilnehmerleitung und/oder einer Verbindungsleitung kommende Signalisierungsnachrichten von einem Media Gateway empfangen und ausgewertet werden,
- daraufhin von dem Media Gateway ein Teil der Verbindungssteuerung selbst durchgeführt wird und für die Durchführung des anderen Teils eine netzzentrale Steuerungseinrichtung beauftragt wird.

11. Verfahren zur Behandlung von Kommunikationsverbindungen in einem paket-basierten Netz, demgemäß
- von einer Teilnehmerleitung und/oder einer nicht-SS7 signalisierter Verbindungsleitung kommende Signalisierungsnachrichten von einem Media Gateway empfangen und ausgewertet werden,
- bei Signalisierungsnachrichten, die von einer SS7-signalisierten Verbindungsleitung kommen, der Anwenderteil von einem Media Gateway empfangen und ausgewertet wird, nachdem die darunter liegenden Protokollschichten von einer netzzentrale Steuerungseinrichtung, die eine zentrale Signaling Gateway Funktion umfasst, bearbeitet wurden,
- daraufhin von dem Media Gateway ein Teil der Verbindungssteuerung selbst durchgeführt wird und für die Durchführung des anderen Teils eine netzzentrale Steuerungseinrichtung beauftragt wird.
